# EUROPEAN PATENT SPECIFICATION

(11) **EP 2 902 621 B1**
(45) Date of publication and mention of the grant of the patent: **20.07.2016**
(21) Application number: 14169723.5
(22) Date of filing: 23.05.2014
(51) Int. Cl.: F03D 7/02, F03D 7/04

(54) **Wind farm and operation method for the same**
Windpark und Verfahren zu dessen Betrieb
Parc éolien et son procédé de fonctionnement

(30) Priority: 24.01.2014 JP 2014011283
(43) Date of publication of application: 05.08.2015
(73) Proprietor: MITSUBISHI HEAVY INDUSTRIES, LTD., Tokyo 108-8215 (JP)
(72) Inventor: WAKASA, Tsuyoshi, TOKYO, 108-8215 (JP); YAMASHITA, Yukio, TOKYO, 108-8215 (JP)
(74) Representative: Intès, Didier Gérard André

(56) References cited:
- WO-A2-2009/083446
- WO-A2-2009/083447
- US-A1- 2009 206 606
- US-A1- 2011 057 444
- US-A1- 2013 138 257

## Description

### [Technical Field]

The present disclosure relates to a wind farm provided with a plurality of wind turbine generators connected to a grid, as well as an operation method of the same.

### BACKGROUND ART

In recent years, wind turbine generators have been introduced as one form of a dispersion type power source from the perspective of environmental preservation. As a large-scale dispersion-type power source, wind farms having a plurality of wind turbines have been built in certain areas.

Generally, for the purpose of maintaining power quality and stabilizing the grid, a dispersion-type power source connected to a commercial grid requires operation according to a grid code. For instance, there is a concern that, in the case where grid disturbance occurs, disconnection of scattered power sources from the grid all at once may cause significant damage to power quality of the grid. Therefore, it is recommended by the grid code to equip disperse-type power sources with FRT function (Fault Ride Through) so that the power sources continue to operate even when system voltage drops.

As one role of a dispersion-type power source with respect to a wind turbine generator of a wind farm, FRT requirements are desirable. For example, Patent Reference 1 describes a wind turbine generator configured so that, when system fault occurs, the wind turbine generator continues to generate power to attain FRT requirements (including LVRT requirements). Moreover, Patent Reference 2 describes a wind turbine generator configured so that, when decline of generator terminal voltage is detected, the wind turbine generator operates to attain FRT requirements of the generator.

### [Citation List]

### [Patent Document]

[Patent Document 1]
   WO 2010/085988 A
[Patent Document 2]
   EP 2481917 A1
[Patent Document 3]
   US 2013/138257 A1
[Patent Document 4]
   US 2009/206606 A1

### SUMMARY

### [Technical Problem]

Apart from disturbance caused by system fault, such as momentary voltage fluctuation and frequency fluctuation, there is also internal fault which occurs in a wind farm as a fault which affects operation of a wind turbine generator. For example, at occurrence of an internal fault resulting from the fault of the generator, converters, or the like of the wind turbine generator installed in the wind farm, if operation of the wind turbine generator is continued, a current flows into a fault point from other linked wind turbine generators and the grid, and this may worsen the damage.

The method described in Patent Reference 1 and Patent Reference 2 is to perform operation according to LVRT requirements when terminal voltage of the wind turbine generator or voltage at a connection point drops. As mentioned above, the LVRT requirements are carried out when a fault occurs on the grid side. However, the fall of the terminal voltage of the generator may be caused by phenomena other than LVRT. When the cause of the terminal-voltage fall of the generator is not the grid fault, it is difficult to say that continuing the operation of the wind turbine generator according to the LVRT requirement is the suitable response to the fault.
In Patent Reference 3 it is also described a method for controlling an electric power system during electrical fault condition, this method includes monitoring an electrical condition of an electric power system, increasing reactive power generation and transmission, monitoring a change in the value of the monitored electrical condition and determining a location of the electrical fault condition as a function of the change in the monitored electrical condition.
Besides, Patent Reference 4 discloses an improved wind turbine and a wind park which permits the use of lighter weight turbines, with the ability to have greater energy capture, more precise control of asymmetrical phases and enhanced maintenance and support of the grid during a fault condition. [0008]

In view of the above issues, it is an object of at least one embodiment of the present invention to provide a wind farm and an operation method for the same, whereby an appropriate response can be taken according to a place where a fault occurs.

### [Means for Solving the Problem]

### [Solution to Problem]

An operation method according to at least one embodiment of the present invention is for a wind farm which comprises wind turbine generators, a plurality of feeders to which at least one of the wind turbine generators is connected, and a substation disposed between the feeders and a grid. This operation method comprises: a terminal voltage detection step of detecting terminal voltage of a generator belonging to each of the wind turbine generators; a provisional control step of, when fall of the terminal voltage is detected in the terminal voltage detection step, reducing mechanical input to the generator of each of the wind turbine generators and increasing reactive current outputted from the generator; and a fault spread suppression step of, when it turns out after starting the provisional control step that the fall of the terminal voltage occurs in association with a fault on a feeder side of the wind farm with respect to the substation, reducing the reactive current which is increased in the provisional control step so as to suppress spread of the fault inside the wind farm without shut down of the wind turbine generators.

When operating the wind farm linked with the grid, one of high-priority demands at the time of occurrence of a fault is the operation to maintain electric-power quality in the grid and stabilize the grid like Grid Code. Therefore, response to the grid fault has high priority among various kinds of faults and the response must be quick. There is also an actual situation that it takes time after the fault occurs to determine a fault point where the fault has occurred.

In view of this, by the above operation method for the wind farm, the terminal voltage of the generator is detected to determine occurrence of the fault, and then operate corresponding to a type of the grid fault. Specifically, the possibility of the grid fault is also included as a cause event, when the fall of the terminal voltage is detected. Thus, for the above reason, operation which is preferentially suitable for the grid fault is performed provisionally. Specifically, the reactive current outputted from the generator is increased in the provisional control step. As a result, even in the case of the grid fault, it is possible to perform the operation which contributes to maintaining the grid voltage. At the same time as increasing the reactive current, the mechanical input to the generator is reduced. Thus, even when the mechanical output of the generator declines in response to the fall of the terminal voltage, it is possible to maintain the balance between the mechanical input and the electric output in the generator.

After the start of the provisional control step, when it becomes clear in the fault spread suppression step that the fall of the terminal voltage has occurred in association with the fault on the feeder side of the wind farm with respect to the substation (hereinafter referred to as feeder-side internal fault), the operation is changed from the operation suitable for the grid fault to the operation suitable for the feeder-side internal fault occurring inside the wind farm. More specifically, when it turns out that the detected fault is the feeder-side internal fault, the reactive current which has been increased in the provisional control step is now reduced so as to reduce the current flowing into the fault point. As a result, spread of the fault is suppressed.

In the above manner, immediately after occurrence of a fault before determining a fault point of the cause event causing the fall of the terminal voltage, the operation suitable for the grid fault which has high priority among a variety of faults is first started, and once the cause event is determined as the feeder-side internal fault, the operation is switched to the operation suitable for the feeder-side internal fault. As a result, it is possible to promptly respond just after the occurrence of the fault and also possible to perform operation in accordance with the fault point.

Further, in the present description, "the mechanical input to the generator is reduced" means that the mechanical energy inputted to the generator is reduced. For example, in the case of a wind turbine generator equipped with a step-up gear, or a wind turbine generator adopting a direct-drive type, the mechanical input to the generator may be reduced by control of a pitch angle of a blade. Moreover, in the case of a wind turbine generator equipped with a hydraulic transmission including a hydraulic pump and a hydraulic motor, the mechanical input to the generator may be decreased by control of the displacement volume of the hydraulic motor.

In some embodiments, the operation method for the wind farm may further comprise:
a fault point identification step of identifying the feeder or the wind turbine generator where the fault occurs; and
a fault removal step of isolating a fault point identified in the fault point identification step from other feeders or other wind turbine generators, and
in the fault spread suppression step, the reactive current is continuously reduced for each of the wind turbine generators at least until the fault point is isolated in the fault removal step.

In the above manner, once the feeder or the wind turbine generator where the fault occurs is identified, the fault point is isolated from other feeders or other wind turbine generators so that other wind turbine generators can keep operating. Further, until the fault point is isolated from other sound feeders or wind turbine generators, the reactive current is continuously reduced in the fault spread suppression step. Thus, it is possible to effectively prevent spread of the fault, and to promptly resume operation of those sound wind turbines afterwards. The "reactive current is continuously reduced" in the fault spread suppression step means that the state where the reactive current is reduced below a reference value is continued, the reference value being the reactive current having been increased in the provisional control step.

In some embodiments, the operation method for the wind farm further comprises a first shutdown control step of, when it turns out after starting the provisional control step that the fall of the terminal voltage occurs in association with a fault at the substation, stopping operation of the wind turbine generators and disconnecting the generator from the grid.

In the case where the fault occurs at the substation (hereinafter, referred to as substation-side internal fault), it does not necessary mean that power transmission can be immediately resumed only by sound equipments of the substation. As it is unlikely that operation by the wind turbine generator can continue, operation of the wind turbine generators connected to grid through the substation is stopped, and these generators are disconnected from the grid. As a result, when the chance of continuation of operation by the wind turbine generator is small, operation of the wind turbine generators is stopped so as to prioritize recovery from the fault.

In some embodiments, in the above operation method for the wind farm,
after starting the provisional control step, the mechanical input is continuously reduced and the reactive current is continuously increased until the fault that causes the terminal voltage fall is identified.

As long as there is a possibility of the grid fault, the operation suitable for the grid fault which has high priority is continued. Thereby, it can be avoided as much as possible, that the wind farm becomes an unstable factor of the grid.

In some embodiments, in the above operation method for the wind farm,
when it turns out after starting the provisional control step that the fall of the terminal voltage occurs in association with a fault at the grid, the mechanical output is continuously reduced and the reactive current is continuously increased in the provisional control step.

Thus, in the case where it is judged that the fall of the terminal voltage is caused by the fault at the grid, the mechanical output is continuously reduced and the reactive current is continuously increased so as to attain maintenance of the wind turbine generator and stabilization of the grid and the electric-power quality.

In some embodiments, the above operation method for the wind farm further comprises a second shutdown control step of, when the fall of the terminal voltage continues longer than a predetermined time, ending the provisional control step, stopping operation of the wind turbine generators and disconnecting the generator from the grid.

As a result, after the wind turbine generators achieve such operation that satisfies requirements for LVRT (Low Voltage Ride Through), for example, operation of the wind turbine generators can be stopped to avoid the influence of the fall of the terminal voltage on the wind turbine generator.

Further, the requirements for LVRT (Low Voltage Ride Through) are requirements for continuing an output, without disconnecting a distributed power source from the grid for a predetermined time even when the grid fault occurs causing the fall of the grid voltage. The required time (the predetermined time) according to the LVRT requirements, when the connection to the grid is maintained, is normally defined by a level of the grid voltage fall.

In some embodiments, the above operation method for the wind farm further comprises a recovery control step of, when the terminal voltage is recovered within a prescribed time, ending the provisional control step, and returning to a normal control in normal operation of the wind turbine generators.

As a result, after attaining operation which satisfies, for example, the requirements for LVRT, the wind turbine generators can resume normal operation once the terminal voltage is recovered.

A wind farm according to at least one embodiment of the present invention comprises:
wind turbine generators each of which comprises a generator, a terminal voltage detection sensor for detecting terminal voltage of the generator, a WTG controller for controlling mechanical input to the generator and reactive current outputted from the generator;
at least one feeder to which at least one of the wind turbine generators is connected;
a substation disposed between the at least one feeder and a grid; and
a WF controller configured to communicate with the WTG controller of each of the wind turbine generators, and
the WTG controller is configured to:
   execute a provisional control mode, when fall of the terminal voltage is detected by the terminal voltage detection sensor, to reduce the mechanical input to the generator and to increase the reactive current outputted from the generator; and
   upon receiving first fault information from the WF controller during execution of the provisional control mode, convert to a fault spread suppression mode to reduce the reactive current which has been increased in the provisional control mode so as to suppress spread of the fault inside the wind farm, the first fault information indicating that the fall of the terminal voltage occurs in association with a fault on a feeder side of the wind farm with respect to the substation.

The WTG controller is configured to execute the provisional control mode when fall of the terminal voltage is detected, so as to reduce the mechanical input to the generator and to increase the reactive current outputted from the generator by means of the WTG controller. As a result, even in the case of the grid fault, it is possible to perform the operation which contributes to maintaining the grid voltage, and even when the mechanical output of the generator declines in response to the fall of the terminal voltage, it is possible to maintain the balance between the mechanical input and the electric output in the generator.

Moreover, the WTG controller is configured to reduce the reactive current which has been increased in the provisional control mode upon receiving the first fault information from the WF controller during execution of the provisional control mode. As a result, it is possible to suppress spread of the fault. Herein, the first fault information indicates that the fall of the terminal voltage occurs in association with a fault on a feeder side of the wind farm with respect to the substation.

In the above manner, immediately after occurrence of a fault before determining a fault point of the cause event causing the fall of the terminal voltage, the operation suitable for the grid fault which has high priority among a variety of faults is first started, and once the cause event is determined as the feeder-side internal fault, the operation is switched to the operation suitable for the feeder-side internal fault. As a result, it is possible to promptly respond just after the occurrence of the fault and also possible to perform operation in accordance with the fault point.

In some embodiments, the above wind farm further comprises:
a fault point identification unit for identifying the feeder or the wind turbine generator where the fault occurs; and
a breaker configured to isolate a fault point identified by the fault point identification unit from other feeders or other wind turbine generators, and
the WTG controller is configured to continuously execute the fault spread suppression mode of reducing the reactive current from the generator at least until the fault point is isolated by the breaker.

In the above manner, once the feeder or the wind turbine generator where the fault occurs is identified by the fault point identification unit, the breaker is operated to isolate this fault point from other feeders or wind turbine generators so that other wind turbine generators can keep operating. Further, the WTG controller is configured to continuously execute the fault spread suppression mode of reducing the reactive current from the generator until the fault point is isolated from other sound feeders or wind turbine generators by the breaker. Thus, it is possible to effectively prevent spread of the fault, and to promptly resume operation of those sound wind turbines afterwards.

In one embodiment, the WTG controller is configured to convert to a first shutdown control mode to stop operation of the wind turbine generator and to disconnect the generator from the grid upon receiving second fault information from the WF controller during execution of the provisional control mode. The second information indicates that the fall of the terminal voltage occurs in association with a fault at the substation.

In this manner, occurrence of the substation-side internal fault is detected and in the case where the possibility of operation continuation of the wind turbine generator is small, the first shutdown control mode is executed to stop operation of the wind turbine generators, and recovery from the fault can be prioritized.

In one embodiment, the WTG controller is configured to continuously execute the provisional control mode to decrease the mechanical input and to increase the reactive current, until fault information identifying the fault that causes the fall of the terminal voltage is sent from the WF controller.

In this manner, as long as there is a possibility of the grid fault, the operation suitable for the grid fault which has high priority is continued. Thereby, it can be avoided as much as possible that the wind farm becomes an unstable factor of the grid.

In one embodiment, the WTG controller is configured to continuously execute the provisional control mode to decrease the mechanical input and to increase the reactive current upon receiving from the WF controller third fault information indicating that the fall of the terminal voltage occurs in association with a fault at the grid.

Thus, in the case where it is judged that the fall of the terminal voltage is caused by the grid fault, the mechanical output is continuously reduced and the reactive current is continuously increased so as to attain maintenance of the wind turbine generator and to maintain stabilization of the grid and the electric-power quality.

In one embodiment, the WTG controller is configured to, when the fall of the terminal voltage continues longer than a predetermined time during execution of the provisional control mode, convert to a second shutdown control mode to stop operation of the wind turbine generator and to disconnect the generator from the grid.

As a result, after the wind turbine generators achieve such operation that satisfies requirements for LVRT, for example, operation of the wind turbine generators can be stopped to avoid the influence of the fall of the terminal voltage on the wind turbine generators.

In one embodiment, the WTG controller is configured to convert to a normal control mode of the wind turbine generator when the terminal voltage is recovered within a predetermined time during execution of the provisional control mode.

As a result, after attaining such operation that satisfies, for example, the requirements for LVRT, the wind turbine generators can resume normal operation once the terminal voltage is recovered.

### [Advantageous Effects]

According to at least one embodiment of the present invention, immediately after occurrence of the fault and before determining a fault point of the cause event causing the fall of the terminal voltage, the operation suitable for the grid fault which has high priority among a variety of faults is started, and once the cause event is determined as the feeder-side internal fault, the operation is switched to the operation suitable for the feeder-side internal fault. As a result, it is possible to promptly respond just after the occurrence of the fault and also possible to perform operation in accordance with the fault point.

### BRIEF DESCRIPTION OF DRAWINGS

FIG.1 is a block diagram of a wind farm and its peripheral devices according to one embodiment.
FIG.2 is an illustration of a particular configuration example of a wind turbine generator.
FIG.3 is an explanatory view regarding types of faults inducing fall of terminal voltage.
FIG.4 is an illustration of operation continuation necessary region of the wind turbine generator.
FIG.5 is a flow chart illustrating a procedure of operating the wind farm according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

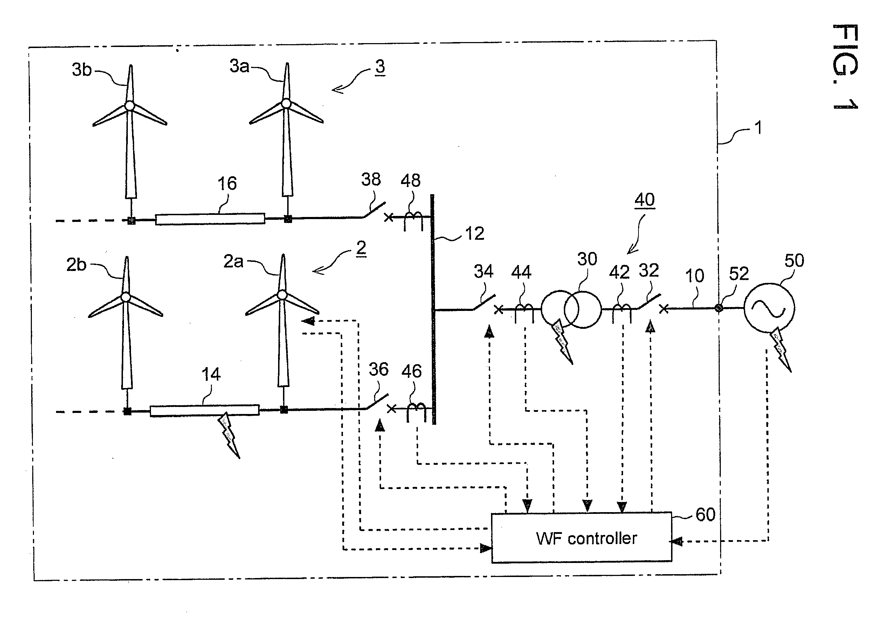

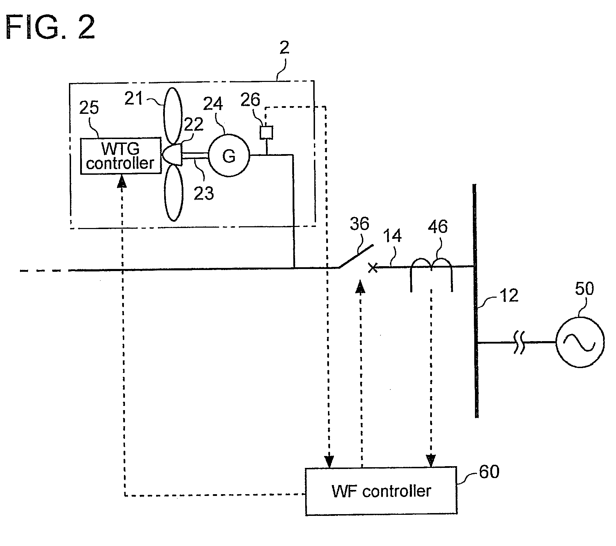

FIG.1 is a block diagram of a wind farm and its peripheral devices according to one embodiment. FIG.2 is an illustration of a particular configuration example of a wind turbine generator.

As shown in FIG. 1 and FIG. 2, a wind farm 1 is connected to a grid 50 through a transmission line 10. The wind farm 1 includes a plurality of wind turbine generators 2 (2a, 2b, --) and 3 (3a, 3b, --), a plurality of substations 30 disposed between the grid 50 and the plurality of wind turbine generators 2, 3, and a WF controller 60 configured to communicate with the plurality of wind turbine generators 2, 3. The wind farm 1 may be installed on the ocean or on the land.

A branch line 12 is connected to the transmission line 10, and at least one feeder 14, 16 is connected to this branch line 12. And at least one wind turbine generator 2, 3 is connected to each of the feeders 14, 16. The transmission line 10, the branch line 12, or feeders 14, 16 may be undersea cables or may be aerial cables.

FIG.1 illustrates the configuration as an example, in which a first feeder 14 and a second feeder 16 are connected in parallel to the branch line 12. Further, two or more wind turbine generators 2a, 2b ---- are connected to the first feeder 14 in parallel, and two or more wind turbine generators 3a, 3b ---- are connected to the second feeder 16 in parallel.

The substation 30 is disposed between a linking point 52 to the grid 50 of the wind farm 1, and the branch line 12 to which the feeders 14 and 16 are connected.

And electricity generated by the wind turbine generators 2, 3 is transmitted to each of the feeders 14, 16, the branch line 12, the transmission line 10, and the substation 30 in this order, and is supplied to the grid 50 via the linking point 52.

As illustrated in FIG. 2, the wind turbine generator 2 according to one embodiment is provided with at least one blade 21, a hub 22 on which the at least one blade 21 is mounted, a rotation shaft 23 connected to the hub 22 and configured to rotate with a wind turbine rotor including the blade 21 and the hub 22, and a generator to which rotation is inputted from the rotation shaft and which is configured to generate electric power. Further, a drive train (not shown) for accelerating rotation may be provided between the rotation shaft 23 and the generator 24. Alternatively, as a power transmission type, a direct drive style where the wind turbine rotor and the generator 24 are directly connected may be adopted. Moreover, the wind turbine generator 2 may be further provided with a WTG controller 25 configured to communicate with the WF controller 60, and a terminal-voltage detection sensor 26 for detecting the terminal voltage of the generator 24.

The WF controller 60 and the WTG controller 25 are configured by a computer which is constituted by arithmetic and program control (CPU), a memory, an external storage, and an I/O device, and are configured to execute the program memorized by external storage so as to execute predetermined functions which are described below. In this embodiment, although the WF controller 60 and the WTG controller 25 are separately described, these may be configured by physically separate objects, or may be configured by a computer incorporating each of the functions.

The WTG controller 25 is mainly configured to control reactive current outputted from the generator and mechanical input to the generator 24. In addition to this, the WTG controller 25 may be configured to control a pitch angle of the blade 21, to control startup, shutdown, or the like of the wind turbine generator 20, and so on.

The WF controller 60 collects fault information in each of the wind turbine generators 2, 3, the substation 30, or the grid 50, and also controls opening and closing of breakers 32, 34, 36, and 38 mentioned later. However, the fundamental function of the WF controller 60 may be surveillance or control of the substation and each of the wind turbine generators 2 and 3 in the wind farm 1. Moreover, the WF controller 60 may be installed in a remote place distant from the wind farm 1. For example, a remote-monitoring control unit (SCADA: Supervisory Control And Data Acquisition) can be used as the WF controller 60.

Herein, only one of the wind turbine generators 2 connected to the first feeder 14 is explained for simplification of explanation. However, other wind turbine turbines 2 connected to the first feeder 14 or other wind turbine generators 3 connected to the second feeder 16 have the same configuration as the wind turbine generator 2 described above.

Returning to FIG. 1, the wind farm 1 according to one embodiment has at least one breaker 32, 34, 36, 38 configured to cut off the current flowing in the wind farm 1. As an example, the breaker 32 is arranged in the transmission line 10 on the grid 50 side with respect to the substation 30, and the breaker 34 is arranged in the transmission line 10 on the wind turbine generator 2, 3 side with respect to the substation. By opening these breakers 32, 34, the substation 30 is disconnected from the transmission line 10. Moreover, the breaker 36 is arranged in the first feeder 14 between the branch line 12 and the wind turbine generator 2, and by opening this breaker 36, the wind turbine generator 2 is disconnected along with the feeder 14. Similarly, the breaker 38 is arranged in the second feeder 16 between the branch line 12 and the wind turbine generator 3, and by opening this breaker 38, the wind turbine generator 3 is disconnected along with second feeder 16.

The wind farm 1 having the above-mentioned configuration is further equipped with the following functions, in order to perform operation corresponding to the fault (e.g. an ground fault, a short circuit, an equipment failure, etc.) which occurs in the grid 50 or in the wind farm 1.

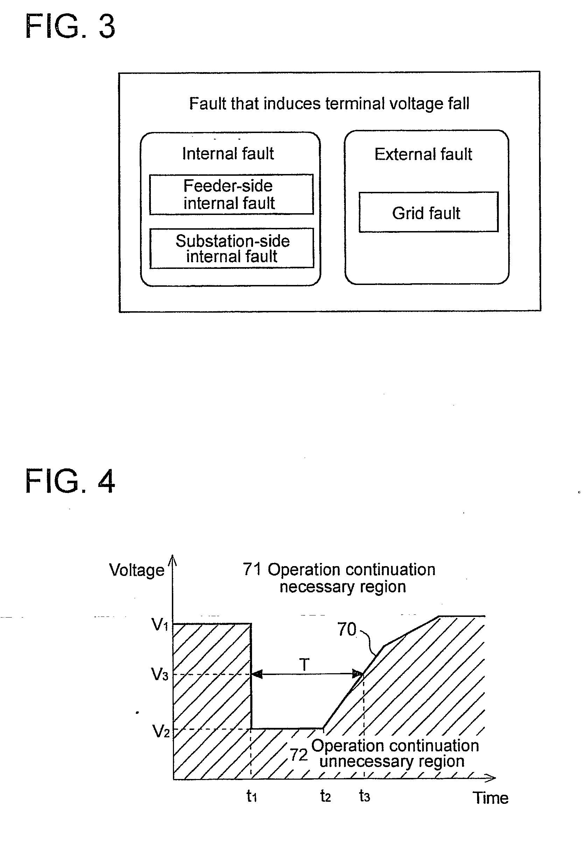

When fall of the terminal voltage is detected by the terminal-voltage detection sensor 26, the WTG controller 25 is configured to change an operation mode from a normal operation mode to an operation mode for fault response. In that case, the kind of fault is classified as shown in FIG. 3, and an operation mode corresponding to the fault type is selected. FIG. 3 is an explanatory drawing regarding classification of the fault which induces fall of the terminal voltage. As shown in this drawing, the fault which induces the terminal voltage fall of the generator 24 (i.e. a fault as the cause event of the terminal-voltage fall) is roughly categorized into an external fault in which a fault point exists outside of the wind farm 1, and an internal fault in which a fault point exists inside the wind farm 1. The external fault is a grid fault where a fault point (a fault occurrence part) exists in the grid 50, and includes a short circuit or a ground fault of the transmission line of the grid 50, or a fault of the instrument which constitutes the grid 50.

Further, the internal fault is categorized into a substation-side in which a fault point exists in the substation 30, and the feeder-side internal fault in which a fault point exists on the feeder 14, 16 side with respect to the substation 30. The substation-side internal fault includes, for example, a short circuit or a ground fault in the transmission line near the substation, or a fault of the instrument which constitutes the substation 30. The feeder-side internal fault includes, for example, a short circuit or a ground fault of the feeder 14, 16, or a fault of the instrument which constitutes the wind turbine generator 2, 3 connected to the feeder 14, 16, etc.

In one embodiment, the WTG controller 25 is configured to execute a provisional control mode, when fall of the terminal voltage is detected by the terminal voltage detection sensor 26, so as to reduce the mechanical input to the generator 24 and to increase the reactive current outputted from the generator 24. At the time of detection of the terminal voltage fall, the possibility of the grid fault is also included as a cause event. Thus, operation which is preferentially suitable for the grid fault is performed provisionally. Specifically, the reactive current outputted from the generator 24 is increased in the provisional control step. As a result, even in the case of the grid fault, it is possible to perform the operation which contributes to maintaining the grid voltage. At the same time as increasing the reactive current, the mechanical input to the generator 24 is reduced in the provisional control mode.

Further, in the present embodiment, "the mechanical input to the generator 24 is reduced" means that the mechanical energy inputted to the generator 24 is reduced. In one embodiment, in the case of a wind turbine generator equipped with a step-up gear disposed between the rotation shaft 23 and the generator 24, the mechanical input to the generator 24 may be reduced by controlling a pitch angle of the blade to a feathering side. Similarly, in the case of a wind turbine generator adopting a direct drive type where the wind turbine rotor and the generator 24 are directly coupled to each other, the mechanical input to the generator 24 may be reduced by controlling a pitch angle of the blade 21 to a feathering side to reduce the rotational energy of the turbine rotor. In another embodiment, in the case of a wind turbine generator 2 equipped with a hydraulic transmission including a hydraulic pump driven by the rotation shaft 23 and a hydraulic motor driven by pressure oil from the hydraulic pump, as a drive train between the rotation shaft 23 and the generator 24, the mechanical input to the generator 24 may be decreased by control of the displacement volume of the hydraulic motor. As a result, it is possible to maintain the balance between the mechanical input and the electric output in the generator 24 even if the electrical output of the generator 24 declines in response to the fall of the terminal voltage of the generator 24.

Herein, the WTG controller 25 is configured to, when the fall of the terminal voltage continues longer than a predetermined time during execution of the provisional control mode, convert to a second shutdown control mode to stop operation of the wind turbine generator 2, 3 and to disconnect the generator 24 from the grid 50.

In one embodiment, the WTG controller 25 may judge whether or not the predetermined time has passed based on the voltage at the linking point 52 obtained by the WF controller 60. Alternatively, in another embodiment, the WF controller 60 may judge whether or not the predetermined time has passed based on the voltage at the linking point 52 obtained by this WF controller 60 and then transmit the result to the WTG controller 25.

FIG.4 is an illustration of operation continuation necessary region of the wind turbine generator 2, 3. In the graph shown in FIG. 4, the continuous line shows a time-serial voltage change line 70 in the linking point 52. In the example shown in this drawing, the voltage change line 70 drops from normal voltage V1 to fault voltage V2 of time t1 which is the time of fault occurrence, and then recovers gradually as restoration progresses from time t2. This voltage change line 70 constitutes a boundary between an operation continuation necessary region 71 where continuing operation of the wind turbine generator 2, 3 is required, and an operation continuation unnecessary region 72 where disconnection is permitted. Specifically, a section above the voltage change line 70 is the operation continuation necessary region 71, and a section under the voltage change line is the operation continuation unnecessary region 72. This voltage change line 70 is beforehand defined for example, by the requirements for LVRT. Further, the requirements for LVRT (Low Voltage Ride Through) are requirements for continuing an output, without disconnecting a distributed power source from the grid for a predetermined time even when the grid fault occurs causing the fall of the grid voltage. The required time (the predetermined time) according to the LVRT requirements, when the connection to the grid 50 is required to be maintained, is normally defined by a level of the grid voltage fall. For instance, when the voltage at the linking point 52 is voltage V3, if the voltage fall at the linking point 52 continues longer than the predetermined time T determined according to the level of the fall (the time from time t1 when the voltage fall has occurred to the time when the voltage recovers to voltage V3), the wind turbine generator 2, 3 is shut down, and the generator 24 is disconnected from the grid 50. As a result, after the wind turbine generators 2 and 3 achieve such operation that satisfies requirements for LVRT, for example, the wind turbine generators 2, 3 can be shut down to avoid the influence of the terminal voltage fall of the generator 24 on the wind turbine generators 2, 3.

During execution of the provisional control mode, upon receiving from the WF controller 60 first fault information which indicates that the fall of the terminal voltage occurs in association with the feeder-side fault, the WTG controller 25 converts to a fault spread suppression mode, in which the reactive current which has been increased in the provisional control step is now reduced so as to reduce the current flowing into the fault point, thereby suppressing spread of the fault inside the wind farm 1. As a result, it is possible to suppress spread of the fault in the case where the fault is identified as the feeder-side internal fault. Further, in order to decrease the reactive current in the fault spread suppression mode, the reactive current is reduced below a reference value which is the reactive current having been increased in the provisional control step.

In one embodiment, once the fault point is identified by a fault point identification unit 40, the WTG controller 25 is configured to operate the breaker 36, 38 to disconnect that fault point from other feeders 14, 16 or other wind turbine generators 2, 3 in the fault spread suppression mode. Further, the WTG controller 25 is configured to continuously execute the fault spread suppression mode to reduce the reactive current from the generator 24 at least until the fault point is isolated by the breaker 36, 38. The control to decrease the reactive current may be performed in accordance with DVS requirements which are defined by Grid Code. Further, the DVS requirements (DVS: Dynamic Voltage Support) are specified to support the grid voltage by supplying predetermined reactive current during the voltage fall and also to positively supply the reactive current for the purpose of early voltage recovery after removing the grid fault.

The fault point identification unit 40 is configured to identify a point where the fault has occurred, i.e. a fault point. For example, the fault point identification unit 40 includes two or more current detection sensors 42, 44, 46, 48. In the example shown in FIG. 1, the current detection sensor 42 is arranged in the transmission line 10 between the substation 30 and the grid 50, and the current detection sensor 44 is arranged in the transmission line 10 between the substation 30 and the branch line 12. By using the current detection sensors 42, 44, the fault at the substation can be detected in a current differential operation relay manner. Moreover, the current detection sensor 46 is arranged in the first feeder 14 between the wind turbine generator 2a and the branch line 12, and the current detection sensor 48 is formed in the second feeder 16 between the wind turbine generator 3a and branch line 12. For example, based on the current value detected by these current detection sensors 46 and 48, the feeder 14, 16 or the wind turbine generator 2, 3 in which the fault has occurred can be identified. Further, regarding means for identifying a fault point, other methods may be used, such as a distance relay type which detects a fault point based on an impedance value to a fault point.

Thus, once the feeder 14, 16 or the wind turbine generator 2, 3 where the fault occurs is identified by the fault point identification unit 40, the breaker 36, 38 is operated to isolate this fault point from other feeders 14, 16 or wind turbine generators 2, 3 so that the normal wind turbine generators 2, 3 can continue operating. Further, the WTG controller 25 is configured to continuously execute the fault spread suppression mode until the fault point is isolated from sound feeders 14, 16 or wind turbine generators 2, 3. Thus, it is possible to effectively prevent spread of the fault, and to promptly resume operation of those sound wind turbine generators 2, 3 afterwards.

The WTG controller 25 is configured to convert to a first shutdown control mode to stop operation of the wind turbine generator 2, 3 and to disconnect the generator 24 from the grid 50 upon receiving second fault information from the WF controller 60 during execution of the provisional control mode. The second information indicates that the terminal voltage fall of the generator 24 occurs in association with a fault at the substation 30 (the substation-side internal fault).

In this manner, occurrence of the substation-side internal fault is detected and in the case where the possibility of operation continuation of the wind turbine generator 2, 3 is small, the first shutdown control mode is executed to stop operation of two or more wind turbine generators 2, 3, and recovery from the fault can be prioritized.

Further, the WTG controller 25 may be configured to continuously execute the provisional control mode to decrease the mechanical input and to increase the reactive current, until fault information identifying the fault that causes the terminal voltage fall of the generator 24 is sent from the WF controller 60.

In this manner, as long as there is a possibility of the grid fault, the operation suitable for the grid fault which has high priority is continuously executed. Thereby, it can be avoided as much as possible that the wind farm becomes an unstable factor of the grid 50.

Furthermore, the WTG controller 25 is configured to continuously execute the provisional control mode to decrease the mechanical input and to increase the reactive current upon receiving third fault information from the WF controller 60. The third information indicates that the fall of the terminal voltage occurs in association with the grid fault.

Thus, in the case where it is judged that the fall of the terminal voltage of the generator 24 is caused by the grid fault, the mechanical output is continuously reduced and the reactive current is continuously increased by continuously executing the provisional control mode, so as to attain maintenance of the wind turbine generator 2. 3, and maintain stabilization of the grid and the electric-power quality.

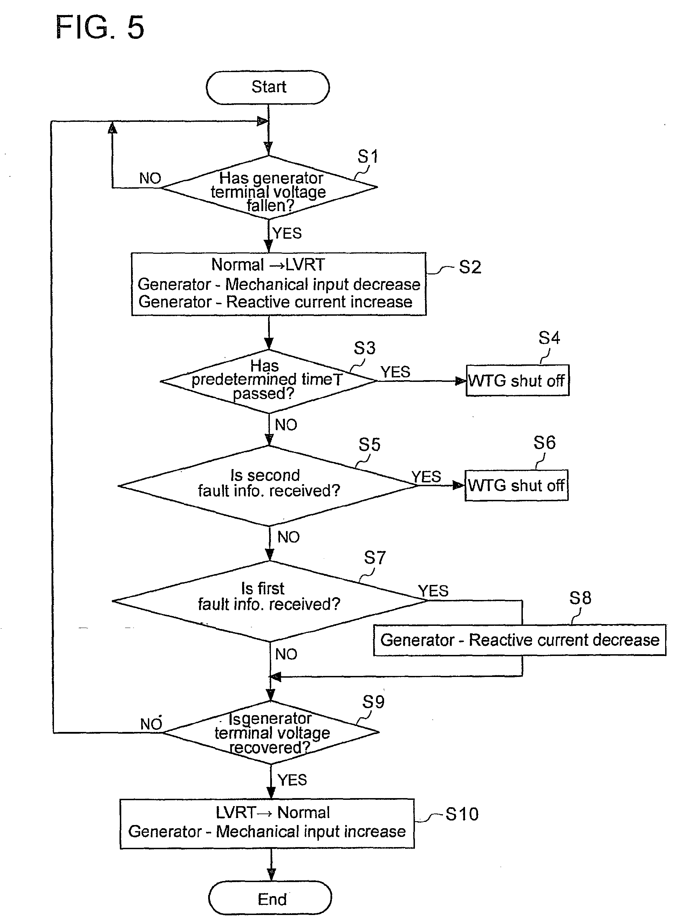

Hereafter, with reference to FIG. 5, the operation method for the wind farm concerning one embodiment is explained in details. FIG.5 is a flow chart illustrating a procedure of operating the wind farm according to one embodiment.

By the operation method of the wind farm according to one embodiment, the terminal-voltage detection sensor 26 detects the terminal voltage of the generator 24 of each of the wind turbine generators 2, 3 in a terminal-voltage detection step (S1). And, if the terminal voltage of the generator 24 has not fallen, the normal operation is continued. If the terminal voltage of the generator 24 is falling, it shifts from the normal operation to the operation which meets LVRT. Specifically, in the provisional control step, the mechanical input to the generator 24 of each of the wind turbine generators 2, 3 is reduced and the reactive current outputted from the generator 24 is increased (S2). Here, when the WTG controller 25 receives the third information from the WF controller 60, which indicates the fall of the terminal voltage of the generator 24 has occurred along with the grid fault, the WTG controller 25 continues the provisional control mode.

Next, it is judged whether or not the fall of the terminal voltage of the generator 24 continues longer than a predetermined time T (see FIG.4) (S3). In the case where the fall of the terminal voltage continues longer than the predetermined time T, the provisional control step is ended to shut down the wind turbine generators 2, 3, and the generator 24 is disconnected from the grid 50 (S4). In addition, in the case where the terminal voltage of the generator 24 is recovered within this predetermined time T, the provisional control step is ended, and it returns to the normal control in normal operation of the wind turbine generators 2, 3 in the recovery control step.

On the other hand, in the case where the fall of the terminal voltage has not continued longer than the predetermined time T, the WTG controller 25 judges whether the WTG controller 25 has received the second fault information indicating that the fall of the terminal voltage of the generator 24 has occurred along with the occurrence of the substation-side internal fault from the WF controller 60 after the start of the provisional control step (S5). If the WTG controller 25 has received the second fault information, operation of the wind turbine generators 2, 3 is stopped to disconnect the generator 24 from the grid (S6). At this time, the breaker 32, 34 may be operated to disconnect the substation 30.

In the case where the WTG controller 25 has not received the second fault information from the WF controller 60, it is then judged whether the WTG controller 25 has received the third fault information from the WF controller 60, which indicates that the fall of the terminal voltage of the generator 24 has occurred in association with the feeder-side inside fault (S7). If the WTG controller 25 has received the third fault information, the reactive current which was increased in the provisional control step is now decreased in the fault spread suppression step so as to suppress spread of the fault inside the wind farm 1 (S8). Further, in the fault spread suppression step, the reactive current which has been increased in the provisional step is reduced below a reference value which is the reactive current having been increased in the provisional control step. Next, it is judged whether the terminal voltage of the generator 24 has recovered (S9). If the terminal voltage is recovered, the mechanical input of the generator 24 is increased and the operation is shifted from the operation which meets the LVRT to the normal operation (S10). On the other hand, if the terminal voltage of the generator 24 is not recovered after executing the series of these procedures, the process returns to the terminal-voltage detection step to repeat the above procedures until the terminal voltage is recovered.

As described above, according to the above embodiments, immediately after occurrence of the fault and even before determining the fault point of the cause event causing the fall of the terminal voltage of the generator 24, the operation suitable for the grid fault which has high priority among a variety of faults is first started, and once the cause event is determined as the feeder-side internal fault, the operation is shifted to the operation suitable for the feeder-side internal fault. As a result, it is possible to promptly respond shortly after the occurrence of the fault and also possible to perform operation in accordance with the fault point.

While the embodiment of the present invention has been described, it is obvious to those skilled in the art that various changes and modifications may be made without materially departing from the novel teachings and advantages of this invention. Accordingly, all such modifications and improvement are intended to be included within scope of this invention.

### [Reference Signs list]

- 1: Wind farm
- 2, 2a, 2b, 3, 3a, 3b: Wind turbine generator
- 10: Transmission line
- 12: Branch line
- 14: First feeder
- 16: Second feeder
- 21: Blade
- 22: Hub
- 23: Rotation shaft
- 24: Generator
- 25: WTG controller
- 26: Terminal voltage detection sensor
- 30: Substation
- 32, 34, 36, 38: Breaker
- 40: Fault point identification unit
- 42, 44, 46, 48: Current detection sensor
- 50: Grid
- 52: Linking point
- 60: WF controller
- 70: Voltage change line
- 71: Operation continuation necessary region
- 72: Operation continuation unnecessary region

## Claims

1. An operation method for a wind farm (1) which comprises wind turbine generators (2, 3), a plurality of feeders (14, 16) to which at least one of the wind turbine generators (2, 3) is connected, and a substation (30) disposed between the feeders (14, 16) and a grid (50), the operation method comprising:
a terminal voltage detection step of detecting terminal voltage of a generator (24) belonging to each of the wind turbine generators (2, 3);
a provisional control step of, when fall of the terminal voltage is detected in the terminal voltage detection step, reducing mechanical input to the generator (24) of each of the wind turbine generators (2, 3) and increasing reactive current outputted from the generator; and
a fault spread suppression step of, when it turns out after starting the provisional control step that the fall of the terminal voltage occurs in association with a fault on a feeder side (14, 16) of the wind farm (1) (30), reducing the reactive current which is increased in the provisional control step so as to suppress spread of the fault inside the wind farm (1) without shut down of the wind turbine generators (2, 3).

2. The operation method for the wind farm (1) according to claim 1, comprising:
a fault point identification step of identifying the feeder (14, 16) or the wind turbine generator (2, 3) where the fault occurs; and
a fault removal step of isolating a fault point identified in the fault point identification step from other feeders (14, 16) or other wind turbine generators (2, 3),
wherein, in the fault spread suppression step, the reactive current is continuously reduced for each of the wind turbine generators (2, 3) at least until the fault point is isolated in the fault removal step.

3. The operation method for the wind farm (1) according to claim 1 or 2, comprising:
a first shutdown control step of, when it turns out after starting the provisional control step that the fall of the terminal voltage occurs in association with a fault at the substation (30), stopping operation of the wind turbine generators (2, 3) and disconnecting the generator (24) from the grid (50).

4. The operation method for the wind farm (1) according to any one of claims 1 to 3,
wherein, after starting the provisional control step, the mechanical input is continuously reduced and the reactive current is continuously increased until the fault that causes the terminal voltage fall is identified.

5. The operation method for the wind farm (1) according to any one of claims 1 to 4,
wherein, when it turns out after starting the provisional control step that the fall of the terminal voltage occurs in association with a fault at the grid (50), the mechanical output is continuously reduced and the reactive current is continuously increased in the provisional control step.

6. The operation method for the wind farm (1) according to any one of claims 1 to 5, comprising:
a second shutdown control step of, when the fall of the terminal voltage continues longer than a predetermined time, ending the provisional control step, stopping operation of the wind turbine generators (2, 3) and disconnecting the generator (24) from the grid (50).

7. The operation method for the wind farm (1) according to any one of claims 1 to 6, comprising:
a recovery control step of, when the terminal voltage is recovered within a predetermined time, ending the provisional control step, and returning to a normal control in normal operation of the wind turbine generators (2, 3).

8. A wind farm (1) comprising:
wind turbine generators (2, 3) each of which comprises a generator (24), a terminal voltage detection sensor (26) for detecting terminal voltage of the generator, a WTG controller (25) for controlling mechanical input to the generator and reactive current outputted from the generator;
a plurality of feeders (14, 16) to which at least one of the wind turbine generators (2, 3) is connected;
a substation (30) disposed between the feeders and a grid (50); and
a WF controller (60) configured to communicate with the WTG controller (25) of each of the wind turbine generators (2, 3),
wherein the WTG controller (25) is configured to:
execute a provisional control mode, when fall of the terminal voltage is detected by the terminal voltage detection sensor (26), to reduce the mechanical input to the generator (24) and to increase the reactive current outputted from the generator;
receive first fault information indicating that the fall of the terminal voltage occurs in association with a fault on a feeder side (14,16) of the wind farm and;
upon receiving the first fault information from the WF controller (60) during execution of the provisional control mode, convert to a fault spread suppression mode to reduce the reactive current which has been increased in the provisional control mode so as to suppress spread of the fault inside the wind farm (1), without shut of the wind turbine generators (2, 3).

9. The wind farm (1) according to claim 8, comprising:
a fault point identification unit (40) for identifying the feeder (14, 16) or the wind turbine generator (2, 3) where the fault occurs; and
a breaker (32, 34, 36, 38) configured to isolate a fault point identified by the fault point identification unit from other feeders (14, 16) or other wind turbine generators (2, 3),
wherein the WTG controller (25) is configured to continuously execute the fault spread suppression mode of reducing the reactive current from the generator at least until the fault point is isolated by the breaker.

10. The wind farm (1) according to claim 8 or 9,
wherein, upon receiving second fault information from the WF controller (60) during execution of the provisional control mode, the WTG controller (25) is configured to convert to a first shutdown control mode to stop operation of the wind turbine generator (2, 3) and to disconnect the generator (24) from the grid (50), the first information indicating that the fall of the terminal voltage occurs in association with a fault at the substation (30).

11. The wind farm (1) according to any one of claims 8 to 10,
wherein the WTG controller (25) is configured to continuously execute the provisional control mode to decrease the mechanical input and to increase the reactive current, until fault information identifying the fault that causes the fall of the terminal voltage is sent from the WF controller (60).

12. The wind farm (1) according to any one of claims 8 to 11,
wherein the WTG controller (25) is configured to continuously execute the provisional control mode to decrease the mechanical input and to increase the reactive current upon receiving from the WF controller (60) third fault information indicating that the fall of the terminal voltage occurs in association with a fault at the grid (50).

13. The wind farm (1) according to any one of claims 8 to 12,
wherein the WTG controller (25) is configured to, when the fall of the terminal voltage continues longer than a predetermined time during execution of the provisional control mode, convert to a second shutdown control mode so as to stop operation of the wind turbine generator (2, 3) and to disconnect the generator (24) from the grid (50).

14. The wind farm (1) according to any one of claims 8 to 13,
wherein the WTG controller (25) is configured to convert to a normal control mode of the wind turbine generator (23) when the terminal voltage is recovered within a predetermined time during execution of the provisional control mode.

## Patentansprüche

1. Betriebsverfahren für einen Windpark (1), der Windkraftanlagen (2, 3), mehrere Speiseleitungen (14, 16), mit denen mindestens eine der Windkraftanlagen (2, 3) verbunden ist, und ein Umspannwerk (30), das zwischen den Speiseleitungen (14, 16) und einem Netz (50) angeordnet ist, umfasst, wobei das Betriebsverfahren umfasst:
einen Klemmenspannungsdetektierschritt des Detektierens der Klemmenspannung eines Generators (24), der zur jeweiligen der Windkraftanlagen (2, 3) gehört,
einen vorläufigen Steuerungsschritt, wenn in dem Klemmenspannungsdetektierschritt ein Abfall der Klemmenspannung detektiert wird, des Reduzierens der mechanischen Eingangsleistung zu dem Generator (24) jeder der Windkraftanlagen (2, 3) und des Erhöhens des Blindstroms, der von dem Generator ausgegeben wird, und
einen Störungsweiterverbreitungsunterdrückungsschritt, wenn sich nach dem Starten des vorläufigen Steuerungsschritts herausstellt, dass der Abfall der Klemmenspannung in Verbindung mit einer Störung auf einer Speiseleitungsseite (14, 16) des Windparks (1) auftritt, des Reduzierens des Blindstroms, der in dem vorläufigen Steuerungsschritt erhöht wird, um die Weiterverbreitung der Störung innerhalb des Windparks (1) ohne Abschaltung der Windkraftanlagen (2, 3) zu unterdrücken.

2. Betriebsverfahren für den Windpark (1) nach Anspruch 1, umfassend:
einen Störstellenidentifizierungsschritt des Identifizierens der Speiseleitung (14, 16) oder der Windkraftanlage (2, 3), wo die Störung auftritt, und
einen Störungsbeseitigungsschritt des Abtrennens einer Störstelle, die in dem Störstellenidentifizierungsschritt identifiziert wurde, von anderen Speiseleitungen (14, 16) oder anderen Windkraftanlagen (2, 3),
wobei bei dem Störungsweiterverbreitungsunterdrückungsschritt der Blindstrom für jede der Windkraftanlagen (2, 3) kontinuierlich reduziert wird, mindestens bis die Störstelle in dem Störungsbeseitigungsschritt abgetrennt wurde.

3. Betriebsverfahren für den Windpark (1) nach Anspruch 1 oder 2, umfassend:
einen ersten Abschaltsteuerungsschritt, wenn sich nach dem Starten des vorläufigen Steuerungsschritts herausstellt, dass der Abfall der Klemmenspannung in Verbindung mit einer Störung an dem Umspannwerk (30) auftritt, des Anhaltens des Betriebs der Windkraftanlagen (2, 3) und des Trennens des Generators (24) von dem Netz (50).

4. Betriebsverfahren für den Windpark (1) nach einem beliebigen der Ansprüche 1 bis 3,
wobei nach dem Starten des vorläufigen Steuerungsschritts die mechanische Eingangsleistung kontinuierlich reduziert wird und der Blindstrom kontinuierlich erhöht wird, bis die Störung, die den Abfall der Klemmenspannung verursacht, identifiziert wird.

5. Betriebsverfahren für den Windpark (1) nach einem beliebigen der Ansprüche 1 bis 4,
wobei, wenn sich nach dem Starten des vorläufigen Steuerungsschritts herausstellt, dass der Abfall der Klemmenspannung in Verbindung mit einer Störung an dem Netz (50) auftritt, in dem vorläufigen Steuerungsschritt die mechanische Ausgangsleistung kontinuierlich reduziert und der Blindstrom kontinuierlich erhöht wird.

6. Betriebsverfahren für den Windpark (1) nach einem beliebigen der Ansprüche 1 bis 5, umfassend:
einen zweiten Abschaltsteuerungsschritt, wenn der Abfall der Klemmenspannung länger als eine vorgegebene Zeit lang andauert, des Beendens des vorläufigen Steuerungsschritts, des Anhaltens des Betriebs der Windkraftanlagen (2, 3) und des Trennens des Generators (24) von dem Netz (50).

7. Betriebsverfahren für den Windpark (1) nach einem beliebigen der Ansprüche 1 bis 6, umfassend:
einen Wiederkehrsteuerungsschritt, wenn die Klemmenspannung innerhalb einer vorgegebenen Zeit wiederkehrt, des Beendens des vorläufigen Steuerungsschritts und des Zurückkehrens zu einer normalen Steuerung im Normalbetrieb der Windkraftanlagen (2, 3).

8. Windpark (1), umfassend:
Windkraftanlagen (2, 3), von denen jede einen Generator (24), einen Klemmenspannungsdetektiersensor (26) zum Detektieren der Klemmenspannung des Generators, eine Windkraftanlagensteuerung (25) zum Steuern der mechanischen Eingangsleistung zu dem Generator und des von dem Generator ausgegebenen Blindstroms umfasst,
mehrere Speiseleitungen (14, 16), mit denen mindestens eine der Windkraftanlagen (2, 3) verbunden ist,
ein Umspannwerk (30), das zwischen den Speiseleitungen und einem Netz (50) angeordnet ist, und
eine Windparksteuerung (60), die dazu ausgebildet ist, mit der Windkraftanlagensteuerung (25) jeder der Windkraftanlagen (2, 3) zu kommunizieren,
wobei die Windkraftanlagensteuerung (25) dazu ausgebildet ist:
einen vorläufigen Steuerungsmodus auszuführen, wenn der Abfall der Klemmenspannung durch den Klemmenspannungsdetektiersensor (26) detektiert wird, um die mechanische Eingangsleistung zu dem Generator (24) zu reduzieren und den Blindstrom, der von dem Generator ausgegeben wird, zu erhöhen,
erste Störungsinformationen zu empfangen, die angeben, dass der Abfall der Klemmenspannung in Verbindung mit einer Störung auf einer Speiseleitungsseite (14, 16) des Windparks auftritt, und
nach Empfangen der ersten Störungsinformationen von der Windparksteuerung (60) während des Ausführens des vorläufigen Steuerungsmodus in einen Störungsweiterverbreitungsunterdrückungsmodus zu wechseln, um den Blindstrom zu reduzieren, der in dem vorläufigen Steuerungsmodus erhöht wird, um die Weiterverbreitung der Störung innerhalb des Windparks (1) ohne Abschaltung der Windkraftanlagen (2, 3) zu unterdrücken.

9. Windpark (1) nach Anspruch 8, umfassend:
eine Störstellenidentifizierungseinheit (40) zum Identifizieren der Speiseleitung (14, 16) oder der Windkraftanlage (2, 3), wo die Störung auftritt, und
einen Trennschalter (32, 34, 36, 38), der dazu ausgebildet ist, eine Störstelle, die durch die Störstellenidentifizierungseinheit identifiziert wird, von anderen Speiseleitungen (14, 16) oder anderen Windkraftanlagen (2, 3) abzutrennen,
wobei die Windkraftanlagensteuerung (25) dazu ausgebildet ist, den Störungsweiterverbreitungsunterdrückungsmodus des Reduzierens des Blindstroms von dem Generator kontinuierlich auszuführen, mindestens bis die Störstelle durch den Trennschalter abgetrennt wurde.

10. Windpark (1) nach Anspruch 8 oder 9,
wobei nach Empfangen von zweiten Störungsinformationen von der Windparksteuerung (60) während des Ausführens des vorläufigen Steuerungsmodus die Windkraftanlagensteuerung (25) dazu ausgebildet ist, zu einem ersten Abschaltsteuerungsmodus zu wechseln, um den Betrieb der Windkraftanlage (2, 3) anzuhalten und den Generator (24) von dem Netz (50) zu trennen, wobei die ersten Informationen angeben, dass der Abfall der Klemmenspannung in Verbindung mit einer Störung an dem Umspannwerk (30) auftritt.

11. Windpark (1) nach einem beliebigen der Ansprüche 8 bis 10,
wobei die Windkraftanlagensteuerung (25) dazu ausgebildet ist, den vorläufigen Steuerungsmodus kontinuierlich auszuführen, um die mechanische Eingangsleistung zu reduzieren und den Blindstrom zu erhöhen, bis Störungsinformationen, welche die Störung, die den Abfall der Klemmenspannung verursacht, identifizieren, von der Windparksteuerung (60) gesendet werden.

12. Windpark (1) nach einem beliebigen der Ansprüche 8 bis 11,
wobei die Windkraftanlagensteuerung (25) dazu ausgebildet ist, den vorläufigen Steuerungsmodus kontinuierlich auszuführen, um nach Erhalten von dritten Störungsinformationen von der Windparksteuerung (60), die angeben, dass der Abfall der Klemmenspannung in Verbindung mit einer Störung an dem Netz (50) auftritt, die mechanische Eingangsleistung zu reduzieren und den Blindstrom zu erhöhen.

13. Windpark (1) nach einem beliebigen der Ansprüche 8 bis 12,
wobei die Windkraftanlagensteuerung (25) dazu ausgebildet ist, wenn der Abfall der Klemmenspannung länger als eine vorgegebene Zeit lang während des Ausführens des vorläufigen Steuerungsmodus andauert, zu einem zweiten Abschaltsteuerungsmodus zu wechseln, um den Betrieb der Windkraftanlage (2, 3) anzuhalten und den Generator (24) von dem Netz (50) zu trennen.

14. Windpark (1) nach einem beliebigen der Ansprüche 8 bis 13,
wobei die Windkraftanlagensteuerung (25) dazu ausgebildet ist, zu einem normalen Steuerungsmodus der Windkraftanlage (23) zu wechseln, wenn die Klemmenspannung innerhalb einer vorgegebenen Zeit während des Ausführens des vorläufigen Steuerungsmodus wiederkehrt.

## Revendications

1. Procédé de fonctionnement pour une ferme éolienne (1) qui comporte des éoliennes (2, 3), une pluralité de lignes d'alimentation (14, 16) auxquels au moins une des éoliennes (2, 3) est reliée, et une sous-station (30) disposée entre les lignes d'alimentation (14, 16) et un réseau (50), le procédé de fonctionnement comportant :
une étape de détection de tension terminale destinée à détecter la tension terminale d'une génératrice (24) appartenant à chacune des éoliennes (2, 3) ;
une étape de commande provisoire destinée, quand une chute de tension terminale est détectée dans l'étape de détection de tension terminale, à réduire une entrée mécanique dans la génératrice (24) de chacune des éoliennes (2, 3) et à augmenter du courant réactif délivré par la génératrice ; et
une étape de suppression de propagation de panne destinée, quand il s'avère après démarrage de l'étape de commande provisoire que la chute de la tension terminale se produit en association avec une panne sur un côté de ligne d'alimentation (14, 16) de la ferme éolienne (1), à réduire le courant réactif qui est augmenté dans l'étape de commande provisoire de façon à supprimer la propagation de la panne à l'intérieur de la ferme éolienne (1) sans arrêt des éoliennes (2, 3).

2. Procédé de fonctionnement pour la ferme éolienne (1) selon la revendication 1, comportant :
une étape d'identification de point de défaut destinée à identifier la ligne d'alimentation (14, 16) ou l'éolienne (2, 3) où la panne se produit ; et
une étape d'élimination de panne destinée à isoler un point de panne identifié dans l'étape d'identification de point de pannes d'autres lignes d'alimentation (14, 16) ou d'autres éoliennes (2, 3),
selon lequel, dans l'étape de suppression de propagation de panne, le courant réactif est réduit de manière continue pour chacune des éoliennes (2, 3) au moins jusqu'à ce que le point de panne soit isolé dans l'étape d'élimination de panne.

3. Procédé de fonctionnement pour la ferme éolienne (1) selon la revendication 1 ou 2, comportant :
une première étape de commande d'arrêt destinée, lorsqu'il s'avère après démarrage de l'étape de commande provisoire que la chute de la tension terminale se produit en association avec une panne au niveau de la sous-station (30), à arrêter le fonctionnement des éoliennes (2, 3) et à déconnecter la génératrice (24) du réseau (50).

4. Procédé de fonctionnement pour la ferme éolienne (1) selon l'une quelconque des revendications 1 à 3,
où, après démarrage de l'étape de commande provisoire, l'entrée mécanique est réduite de manière continue et le courant réactif est augmenté de manière continue jusqu'à ce que la panne qui provoque la chute de tension terminale soit identifiée.

5. Procédé de fonctionnement pour la ferme éolienne (1) selon l'une quelconque des revendications 1 à 4,
selon lequel, lorsqu'il s'avère après démarrage de l'étape de commande provisoire que la chute de la tension terminale se produit en association avec une panne du réseau (50), la sortie mécanique est réduite de manière continue et le courant réactif est augmenté de manière continue dans l'étape de commande provisoire.

6. Procédé de fonctionnement pour la ferme éolienne (1) selon l'une quelconque des revendications 1 à 5, comportant :
une deuxième étape de commande d'arrêt destinée, quand la chute de la tension terminale continue plus longtemps qu'un temps prédéterminé, à terminer l'étape de commande provisoire, arrêter le fonctionnement des éoliennes (2, 3) et déconnecter la génératrice (24) du réseau (50).

7. Procédé de fonctionnement pour la ferme éolienne (1) selon l'une quelconque des revendications 1 à 6, comportant :
une étape de commande de récupération destinée, quand la tension terminale est récupérée dans un temps prédéterminé, à terminer l'étape de commande provisoire, et revenir à une commande normale dans un fonctionnement normal des éoliennes (2, 3).

8. Ferme éolienne (1) comportant :
des éoliennes (2, 3) qui comportent chacune une génératrice (24), un capteur de détection de tension terminale (26) destiné à détecter une tension terminale de génératrice, un dispositif de commande WTG (25) destiné à commander une entrée mécanique vers la génératrice et du courant réactif délivré par la génératrice ;
une pluralité de lignes d'alimentation (14, 16) auxquels au moins une des éoliennes (2, 3) est reliée ;
une sous-station (30) disposée entre les lignes d'alimentation et un réseau (50) ; et
un dispositif de commande WF (60) configuré pour communiquer avec le dispositif de commande WTG (25) de chacune des éoliennes (2, 3),
dans laquelle le dispositif de commande WTG (25) est configuré pour :
exécuter un mode de commande provisoire, quand la chute de la tension terminale est détectée par le capteur de détection de tension terminale (26), pour réduire l'entrée mécanique vers la génératrice (24) et pour augmenter le courant réactif délivré par la génératrice ;
recevoir une première information de panne indiquant que la chute de la tension terminale se produit en association avec une panne sur un côté de ligne d'alimentation (14, 16) de la ferme éolienne et ;
lors de la réception de la première information de panne du dispositif de commande WF (60) pendant l'exécution du mode de commande provisoire, passer à un mode de suppression de propagation de panne pour réduire le courant réactif qui a été augmenté dans le mode de commande provisoire de façon à supprimer une propagation de la panne à l'intérieur de la ferme éolienne (1), sans arrêt des éoliennes (2, 3).

9. Ferme éolienne (1) selon la revendication 8, comportant :
une unité d'identification de point de panne (40) destinée à identifier la ligne d'alimentation (14, 16) ou l'éolienne (2, 3) où la panne se produit ; et
un coupe-circuit (32, 34, 36, 38) configuré pour isoler un point de panne identifié par l'unité d'identification de point de panne d'autres lignes d'alimentation (14, 16) ou d'autres éoliennes (2, 3),
dans laquelle le dispositif de commande WTG (25) est configuré pour exécuter de manière continue le mode de suppression de propagation de panne destiné à réduire le courant réactif provenant de la génératrice au moins jusqu'à ce que le point de panne soit isolé par le coupe-circuit.

10. Ferme éolienne (1) selon la revendication 8 ou 9,
dans laquelle, lors de la réception de la deuxième information de panne provenant du dispositif de commande WF (60) pendant une exécution du mode de commande provisoire, le dispositif de commande WTG (25) est configuré pour passer à un premier mode de commande d'arrêt pour arrêter le fonctionnement de l'éolienne (2, 3) et pour déconnecter la génératrice (24) du réseau (50), la première information indiquant que la chute de la tension terminale se produit en association avec une panne au niveau de la sous-station (30).

11. Ferme éolienne (1) selon l'une quelconque des revendications 8 à 10,
dans laquelle le dispositif de commande WTG (25) est configuré pour exécuter de manière continue le mode de commande provisoire pour diminuer l'entrée mécanique et pour augmenter le courant réactif, jusqu'à ce que l'information de panne identifiant la panne qui provoque la chute de la tension terminale soit envoyée depuis le dispositif de commande WF (60).

12. Ferme éolienne (1) selon l'une quelconque des revendications 8 à 11,
dans laquelle le dispositif de commande WTG (25) est configuré pour exécuter de manière continue le mode de commande provisoire pour diminuer l'entrée mécanique et pour augmenter le courant réactif lors de la réception en provenance du dispositif de commande WF (60) d'une troisième information de panne indiquant que la chute de la tension terminale se produit en association avec une panne au niveau du réseau (50).

13. Ferme éolienne (1) selon l'une quelconque des revendications 8 à 12,
dans laquelle le dispositif de commande WTG (25) est configuré pour, quand la chute de la tension terminale continue plus longtemps qu'un temps prédéterminé pendant l'exécution du mode de commande provisoire, passer à un deuxième mode de commande d'arrêt de façon à arrêter un fonctionnement de l'éolienne (2, 3) et pour déconnecter la génératrice (24) du réseau (50).

14. Ferme éolienne (1) selon l'une quelconque des revendications 8 à 13,
dans laquelle le dispositif de commande WTG (25) est configuré pour passer à un mode de commande normal de l'éolienne (23) quand la tension terminale est récupérée dans un temps prédéterminé pendant l'exécution du mode de commande provisoire.
